# EUROPÄISCHE PATENTSCHRIFT

(11) **EP 2 615 711 B1**
(45) Veröffentlichungstag und Bekanntmachung des Hinweises auf die Patenterteilung: **07.03.2018**
(21) Anmeldenummer: 12198118.7
(22) Anmeldetag: 19.12.2012
(51) Int. Cl.: H02J 4/00, H02K 11/00, A47L 9/28, H02K 11/02, F24C 15/20

(54) **Schaltung für ein Haushaltsgerät**
Circuit for a domestic appliance
Commutation pour un appareil ménager

(30) Priorität: 11.01.2012 DE 102012200320
(43) Veröffentlichungstag der Anmeldung: 17.07.2013
(73) Patentinhaber: BSH Hausgeräte GmbH, 81739 München (DE)
(72) Erfinder: Graw, Martin, 75203 Königsbach-Stein (DE)

(56) Entgegenhaltungen:
- DE-A1- 19 534 142
- DE-A1-102005 059 051
- DE-A1-102006 060 744
- US-A- 5 379 609
- US-A1- 2007 247 091
- US-A1- 2010 269 815
- US-B1- 6 215 261

## Beschreibung

Die Erfindung betrifft eine Schaltung für ein Haushaltsgerät, insbesondere Dunstabzugshaube.

Für Dunstabzugshauben ist es bekannt, einen Lüftermotor in Form eines bürstenlosen Gleichstrommotors mittels einer Netzspannung von 230 Volt zu betreiben. Aus EP 2 249 088 A1 ist bekannt, an Dunstabzugshauben einen bürstenlosen Gleichstrommotor mit einem vorgeschalteten Niederspannungstrafo zu betreiben. Für Dunstabzugshauben ist es bekannt, dass sie zur Beleuchtung eines darunterliegenden Bereichs eine Beleuchtungseinrichtung aufweisen, welche Leuchtdioden (LEDs) als Lichtquellen verwendet. Solche LED-Beleuchtungseinrichtungen weisen typischerweise eigene Spannungsversorgungen oder Treiber zum Betrieb der Leuchtdioden auf.

DE 195 34 142 A1 offenbart, dass in einem R-C-Filter zur Verhinderung des Eintritts von Stör- bzw. Rauschsignalen in ein Netzteilsystem über seine Ausgangsschaltung eine Schaltungskomponente, die als Widerstandselement für den Filter wirkt, in Serie mit der Ausgangsschaltung angeschlossen ist und ein kapazitives Element zwischen einem Abschnitt der Schaltungskomponente und Erde angeschlossen ist, um einen Filter vom R-C-Typ auszubilden. Ein Drahtbestandteil, eine gedruckte Leiterfolie, ein Durchgangsloch-Bestandteil, eine Halbleitereinrichtung oder andere derartige Schaltungskömponenten können als die Schaltungskomponente verwendet werden, die als das Widerstandselement zum Aufbau des Filters vom R-C-Typ wirkt.

US 5,379,609 offenbart, dass in einer Klimaanlage mit einem Luftfilter, umfassend einen Rahmenkörper und ein Gitter, die einstückig ausgebildet sind, ein bestimmter Teil des Rahmenkörpers breiter als die anderen Teile des Rahmenkörpers ist und ein Stützpfosten, der in Eingriff mit einem Verriegelungsschlitz an dem Hauptkörper bringbar ist, an dem verbreiterten Abschnitt angeordnet ist, so dass selbst dann, wenn die Verbindung zwischen dem Rahmenkörper und dem Gitter entfernt von dem Stützpfosten ausgebildet ist, die mechanische Festigkeit des Pfostens beibehalten werden kann. Darüber hinaus ist die Breite der Verbindung an dem verbreiterten Teil im Wesentlichen gleich zu denen der anderen Abschnitte der Verbindung ist, so dass das Gitter gleichmäßig an dem Rahmenkörper befestigt ist.

Die US 2007 / 0247091, gegen die die Ansprüche abgegrenzt wurden, offenbart ein Netzteil mit einem Filter, das eine Motorsteuerung für einen bürstenlosen Motor versorgt.

Es ist die **Aufgabe** der vorliegenden Erfindung, eine Möglichkeit zum vereinfachten Betrieb von Haushaltsgeräten mit mehreren elektrisch betriebenen Komponenten bereitzustellen.

Diese Aufgabe wird gemäß den Merkmalen der unabhängigen Ansprüche gelöst. Bevorzugte Ausführungsformen sind insbesondere den abhängigen Ansprüchen entnehmbar. Die Aufgabe wird gelöst durch eine Schaltung für ein Haushaltsgerät mit einem Entstörfilter, mindestens einer mit dem Entstörfilter verbundenen Motorsteuerung für mindestens einen Motor und einem mit dem Entstörfilter verbundenen Netzteil.

Diese Schaltung weist den Vorteil auf, dass sie sowohl eine Hochspannung als auch eine von dem Netzteil erzeugte kleinere Spannung, insbesondere Kleinspannung, zum Betrieb und/oder zur Steuerung unterschiedlicher elektrischer betriebener Komponenten, einschließlich mindestens eines Motors, bereitstellen kann und dabei mit einer geringen Zahl an Bauteilen auskommt. Insbesondere wird nur ein Entstörfilter für eine Hochspannungsseite und eine Niederspannungsseite benötigt. Zudem kann Leiterplattenfläche und Verkabelung eingespart werden. Dies ermöglicht eine besonders preiswerte Schaltung. Die Schaltung ist außerdem besonders kompakt und leicht in ein Haushaltsgerät einbaubar.

Es ist eine Weiterbildung, dass das Entstörfilter eingangsseitig an eine Dreiphasen-Wechselstromversorgung anschließbar ist.

Das Netzteil kann insbesondere ein Schaltnetzteil sein. Das Netzteil mag insbesondere eine maximale Nennleistung von ca. zehn Watt aufweisen.

Es ist eine Ausgestaltung, dass die Leiterplatte einen mit einem dem Netzteil verbundenen Leuchtdiodentreiber aufweist. Folglich kann auf eine eigene Spannungsversorgung oder einen eigenen Treiber für eine an den Leuchtdiodentreiber anschließbare LED-Beleuchtung verzichtet werden.

Der Leuchtdiodentreiber kann beispielsweise als ein einfacher Transformator oder als eine Treiberschaltung ausgebildet sein. An den Leuchtdiodentreiber kann mindestens eine Leuchtdiode angeschlossen werden. Der Leuchtdiodentreiber kann mittels des Netzteils bespielweise mit einer Spannung von 12 Volt betreibbar sein.

Es ist noch eine Ausgestaltung, dass die Leiterplatte einen Bus oder ein Bussystem aufweist. So kann auf flexible Weise eine Steuerung verschiedener daran (intern und/oder extern) angeschlossener Komponenten oder Module und folglich eine zusätzliche Einsparung von Bauteilen erreicht werden. Diese Komponenten oder Module können beispielsweise externe weitere Beleuchtungseinrichtungen ohne einen eigenen Trafo usw. umfassen.

Unter einer externen Komponente (oder Modul) kann insbesondere eine Komponente verstanden werden, welche nicht auf der Leiterplatte verwirklicht ist, aber einen Teil des zugehörigen Haushaltsgeräts darstellt.

Es ist eine Weiterbildung, dass der Bus oder das Bussystem mittels des Netzteils versorgbar ist.

Es ist noch eine Weiterbildung, dass der Bus ein D-Bus ist. Ein D-Bus lässt sich insbesondere als ein optischer, insbesondere opto-digitaler, Bus ausbilden, aber auch zusätzlich oder alternativ als ein (elektrischer) digitaler Bus. Dies ermöglicht einen besonders flexiblen Einsatz und Konfiguration der Schaltung.

Es ist noch eine weitere Ausgestaltung, dass die Leiterplatte einen dem Netzteil nachgeschalteten integrierten Schaltkreis aufweist. Dies ergibt den Vorteil, dass die Schaltung eine Steuerung oder Regelung daran angeschlossener Verbraucher ermöglicht. Der integrierte Schaltkreis kann insbesondere als ein Mikroprozessor und/oder ein Mikrocontroller ausgebildet sein.

Es ist auch eine Ausgestaltung, dass der integrierte Schaltkreis mit mindestens einem (betätigbaren) Bedienelement verbunden ist. Dies ermöglicht eine Einstellung von Betriebsparametern mindestens einer an die Schaltung angeschlossenen elektrisch betriebenen Komponente durch einen Nutzer oder Bediener. Insbesondere mag der integrierte Schaltkreis eingangsseitig mit mindestens einem Signalausgang des mindestens einen Bedienelements verbunden sein.

Das mindestens eine Bedienelement mag insbesondere ein mechanisches Bedienelement umfassen, wie einen Schalter, Taster, Drehregler usw., oder z.B. auch einen Sensorbildschirm.

Es ist ferner eine Weiterbildung, dass der integrierte Schaltkreis mit dem Bus dergestalt verbunden ist, dass Ausgangssignale, z.B. Steuersignale, der Logik über den Bus geleitet werden und/oder sogar den Bus steuern können. Insbesondere mag der integrierte Schaltkreis über den Bus mit dem Leuchtdiodentreiber zu dessen Steuerung gekoppelt sein. Insbesondere mag der integrierte Schaltkreis ein Dimmsignal an den Leuchtdiodentreiber ausgeben.

Es ist außerdem eine Weiterbildung, dass der integrierte Schaltkreis mit einer Spannung von 3,3 Volt und/oder von 5 Volt betreibbar ist.

Es ist außerdem eine Ausgestaltung, dass die Leiterplatte mit einem dem Entstörfilter nachgeschalteten Anschlussmodul bestückt ist und das Anschlussmodul mittels des integrierten Schaltkreises steuerbar ist. Dies ermöglicht einen Anschluss von Hochspannungsverbrauchern an die Schaltung, welchen ein entstörtes Hochspannungssignal bereitgestellt wird, das gesteuert durch den integrierten Schaltkreis veränderbar ist, insbesondere gezielt verringerbar oder dimmbar ist, insbesondere bezüglich seines Spannungspegels oder eines Tastverhältnisses. Dazu mag der integrierte Schaltkreis ein entsprechendes Dimmungs-Steuersignal ausgeben. Das Anschlussmodul kann insbesondere getaktete Hochspannungssignale ausgeben.

Das Anschlussmodul mag insbesondere einen Treiber zum Hochspannungsbetrieb aufweisen oder als ein solcher ausgebildet sein.

Insbesondere können einfache mechanische Bedienelemente auf einer Hochvoltbasis, z.B. für sog. Entry-Geräte, an die Steuerung angeschlossen werden. Auch mögen externe Spannungswandler (z.B. für weitere Beleuchtungseinrichtungen wie eine Umgebungsbeleuchtung mit Leuchtdioden oder Halogenlampen usw., für eine Ultraschalleinrichtung usw.) anschließbar sein.

Es ist ferner eine Ausgestaltung, dass der mindestens eine Motor ein bürstenloser Gleichstrommotor ist. Die Motorsteuerung ist also insbesondere in der Lage, aus einem entstörten elektrischen Signal (Strom, Spannung, Energie usw.) der Dreiphasen-Wechselstromversorgung eine zum Betrieb des bürstenlosen Gleichstrommotors geeignete Spannung zu erzeugen.

Es ist auch eine Weiterbildung, dass die Motorsteuerung zum Anschluss von mehreren, insbesondere zwei, bürstenlosen Gleichstrommotoren eingerichtet ist, was einen Einsatzbereich der Schaltung weiter erhöht.

Es ist noch eine Ausgestaltung, dass die Motorsteuerung auch dem Netzteil nachgeschaltet ist. Die Motorsteuerung kann also sowohl ein entstörtes Netzsignal, insbesondere Dreiphasensignal, als auch ein Kleinspannungssignal, insbesondere eine Gleichspannung von z.B. 15 Volt, von dem Netzteil erhalten. Dies ermöglicht einen Einsatz mindestens eines Dreiphasengleichrichters in Sechspuls-Brückenschaltung (B6) als oder mit der Motorsteuerung.

In der folgenden Figur wird die Erfindung anhand eines Ausführungsbeispiels schematisch beschrieben.

Die Fig. zeigt eine Schaltung 11, die auf einer Leiterplatte 12 realisiert ist. Die Schaltung 11 ist insbesondere als eine Schaltung, insbesondere Steuerschaltung, für ein Haushaltsgerät in Form einer Dunstabzugshaube oder Esse einsetzbar.

Die Leiterplatte 12 ist mindestens mit einem Entstörfilter 13, insbesondere EMV-Filter, bestückt, an das eingangsseitig eine Stromversorgung anschließbar ist, insbesondere eine Netzversorgung, insbesondere eine Dreiphasen-Wechselstromversorgung 14. Die Stromversorgung 14 stellt hier ein Hochspannungssignal bereit, z.B. 230 Volt. Das Entstörfilter 13 stellt ausgangsseitig ein entstörtes Hochspannungssignal bereit.

Das Entstörfilter 13 ist ausgangsseitig mit einem Eingang eines ebenfalls auf der Leiterplatte 12 angeordneten Schaltnetzteils 15 verbunden. Das Schaltnetzteil 15 ist insbesondere auf eine Leistung von ca. 10 Watt ausgelegt und erzeugt ausgangsseitig mindestens eine Kleinspannung bzw. ein oder mehrere Kleinspannungssignale.

Das Schaltnetzteil 15 ist ausgangsseitig mit einem Eingang eines Leuchtdiodentreibers 16 verbunden (so dass der Leuchtdiodentreibers 16 also dem Schaltnetzteil 15 nachgeschaltet ist). So kann das Schaltnetzteil 15 den Leuchtdiodentreiber 16 mit einer Betriebsspannung versorgen, z.B. in Höhe von ca. zwölf Volt. Der Leuchtdiodentreiber 16 ist ausgangsseitig an mindestens eine externe Leuchtdiode (oder andere Lichtquelle) 17 anschließbar, z.B. eine LED-Kette oder eine LED-Spot-Leuchte, und betreibt diese. Dadurch kann auf eine eigene Spannungsversorgung oder Treiber für die mindestens eine externe LED 17 verzichtet werden.

An der Leiterplatte 12 befindet sich ferner ein Datenübertragungs-Bus in Form eines D-Busses 18, insbesondere opto-digitalen D-Busses. Der D-Bus 18 wird mittels des Schaltnetzteils 15 versorgt. Über den D-Bus 18 können externe Module 19 oder Geräte gesteuert oder betrieben werden. Diese Module 19 oder Geräte können beispielsweise externe weitere Beleuchtungseinrichtungen ohne einen eigenen Trafo u.v.m. umfassen.

Die Leiterplatte 12 weist darüber hinaus einen integrierten Schaltkreis 20 (insbesondere in Form eines Mikrocontrollers) auf, welcher mittels des Schaltnetzteils 15 mit einer Betriebsspannung von 3,3 Volt betreibbar ist. Der integrierte Schaltkreis 20 ist mittels mindestens eines betätigbaren Bedienelements 21 (z.B. Schalters, Drehreglers usw.) gekoppelt und mag ein Ausgangssignal (Stellsignal) des mindestens einen betätigbaren Bedienelements 21 zur Steuerung und/oder Reglung mindestens einer mit dem integrierten Schaltkreis 20 ausgangsseitig verbundenen elektrisch betriebenen Komponente verwenden.

Eine solche Komponente ist hier der Leuchtdiodentreiber 16, mit dessen Eingang der integrierte Schaltkreis 20 ausgangsseitig gekoppelt ist. Die kommunikative Kopplung zwischen dem integrierten Schaltkreis 20 und dem Leuchtdiodentreiber 16 kann über eine grundsätzlich beliebige Datenverbindung erreicht werden, z.B. eine elektrische oder eine elektro-optische Datenverbindung. Diese Datenverbindung mag insbesondere einen Optokoppler 26 aufweisen, welcher insbesondere eine galvanische Trennung des von dem integrierten Schaltkreis 20 bereitgestellten Signals bewirken kann.

Beispielsweise kann ein Nutzer über das betätigbare Bedienelement 21 eine Helligkeit der mindestens einen externen Leuchtdiode 17 einstellen ("dimmen"). Das Stellsignal des Bedienelements 21 wird dazu von dem integrierten Schaltkreis 20 aufgenommen und in ein entsprechendes Steuersignal ("Dimmsignal") für den Leuchtdiodentreiber 16 umgesetzt. Der Leuchtdiodentreiber 16 verändert aufgrund des Steuersignals einen Spannungspegel, ein Tastverhältnis o.ä. so, dass die mindestens eine externe Leuchtdiode 17 wahlweise schwächer oder stärker leuchtet.

Eine weitere solche Komponente ist hier ein Anschlussmodul 22 zum Anschluss externer Hochspannungsverbraucher 23. Das Anschlussmodul 22 ist ebenfalls mittels des integrierten Schaltkreises 20 steuerbar, z.B. "dimmbar" in dem Sinn, dass ein von dem Anschlussmodul 22 ausgegebenes Hochspannungssignal in Bezug auf seinen Spannungspegel oder (bei Ausgabe eines getakteten Hochspannungsignals) ein Tastverhältnis einstellbar ist. Zur Bereitstellung dieses Hochspannungssignals ist das Anschlussmodul 22 eingangsseitig an einen Ausgang des Entstörfilters 13 angeschlossen und empfängt von diesem das entstörte Hochspannungssignal. Das Anschlussmodul 22 ist folglich sowohl dem Entstörfilter 13 als auch dem integrierten Schaltkreis 20 nachgeschaltet. Das Anschlussmodul 22 ermöglicht einen Anschluss von, je nach Ausgestaltung und/oder Einstellung des Anschlussmoduls 22, getaktet oder ungetaktet betreibbaren Hochspannungsverbrauchern 23. Insbesondere können einfache mechanische Bedienelemente auf einer Hochvoltbasis, z.B. für sog. Entry-Geräte, angeschlossen werden. Auch mögen externe Spannungswandler (z.B. für weitere Beleuchtungseinrichtungen wie eine Umgebungsbeleuchtung mit Leuchtdioden oder Halogenlampen usw., für eine Ultraschalleinrichtung usw.) anschließbar sein.

An der Leiterplatte 12 ist ferner eine Motorsteuerung 24 angeordnet. Die Motorsteuerung 24 ist eingangsseitig sowohl mit dem Ausgang des Entstörfilters 14 verbunden und empfängt von diesem das entstörte Hochspannungssignal in Höhe von 230 Volt als auch mit dem Schaltnetzteil 15, von dem es eine Kleinspannung, z.B. in Höhe von 15 Volt empfängt. Die Motorsteuerung 24 kann also sowohl ein entstörtes Netzsignal, insbesondere Dreiphasensignal, als auch ein Kleinspannungssignal, insbesondere eine Gleichspannung von z.B. 15 Volt, von dem Netzteil erhalten. Dies ermöglicht einen Einsatz einer Motorsteuerung 24 mit hier zwei Dreiphasengleichrichtern in Form von Sechspuls-Brückenschaltungen ("B6") zum Betrieb jeweils eines bürstenlosen Gleichstrommotors 25. Zumindest einer der bürstenlosen Gleichstrommotoren 25 kann beispielsweise ein Lüftermotor für die Dunstabzugshaube sein und mittels der Motorsteuerung 24 z.B. drehzahlabhängig betrieben werden, z.B. mittels einer Phasenanschnittsteuerung.

Selbstverständlich ist die vorliegende Erfindung nicht auf das gezeigte Ausführungsbeispiel beschränkt.

Beispielsweise mag das Haushaltsgerät auch ein Ofen sein, der mindestens eine Motor z.B. ein Motor eines Wrasenlüfters oder einer Umluftheizung sein und die Beleuchtungseinrichtung zur Beleuchtung eines Garraums verwendet werden. Auch mag das Haushaltsgerät ein Mikrowellengerät sein.

### Bezugszeichenliste

- 11: Schaltung
- 12: Leiterplatte
- 13: Entstörfilter (EMV-Filter)
- 14: Dreiphasen-Wechselstromversorgung
- 15: Schaltnetzteil
- 16: Leuchtdiodentreiber
- 17: Leuchtdiode
- 18: D-Bus
- 19: Modul
- 20: Integrierter Schaltkreis
- 21: Bedienelement
- 22: Anschlussmodul
- 23: Hochspannungsverbraucher
- 24: Motorsteuerung
- 25: Bürstenloser Gleichstrommotor
- 26: Optokoppler

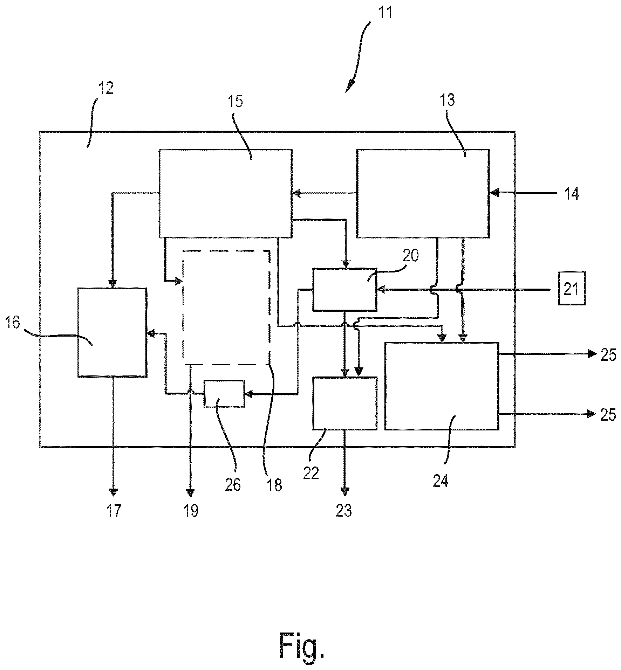

## Patentansprüche

1. Haushaltsgerät, aufweisend eine Schaltung (11), welche Schaltung (11) eine Leiterplatte (12) mit
- einem Entstörfilter (13), das ein entstörtes Hochspannungssignal bereitstellt,
- einem Schaltnetzteil (15), das zur Versorgung mit dem entstörten Hochspannungssignal mit dem Entstörfilter (13) verbunden ist, und
- einer Motorsteuerung (24) für einen Motor (25), die mit dem Schaltnetzteil (15) zur Versorgung mit einer ersten Kleinspannung verbunden ist,
aufweist, **dadurch gekennzeichnet, dass**
- die Motorsteuerung (24) zusätzlich zur Versorgung mit dem entstörten Hochspannungssignal mit dem Entstörfilter (13) verbunden ist.

2. Haushaltsgerät nach Anspruch 1, wobei das Netzteil (15) ausgangsseitig mehrere unterschiedliche Kleinspannungen erzeugt.

3. Haushaltsgerät nach einem der vorhergehenden Ansprüche, wobei die Leiterplatte (12) einen Bus oder ein Bussystem (18) in Form eines opto-digitalen D-Busses aufweist, der mittels des Netzteils (15) mit einer zweiten Kleinspannung versorgt wird.

4. Haushaltsgerät nach einem der vorhergehenden Ansprüche, wobei die Leiterplatte (12) einen dem Netzteil (15) nachgeschalteten integrierten Schaltkreis (20) aufweist, der mittels des Netzteils (15) mit einer dritten Kleinspannung betreibbar ist.

5. Haushaltsgerät nach Anspruch 4, wobei der integrierte Schaltkreis (20) mit mindestens einem betätigbaren Bedienelement (21) verbunden ist und dazu eingerichtet ist, ein Stellsignal des mindestens einen betätigbaren Bedienelements (21) zur Steuerung oder Regelung eines Leuchtdiodentreibers (16) zu verwenden, wobei der Leuchtdiodentreiber (16) mit dem integrierten Schaltkreis (20) gekoppelt ist.

6. Haushaltsgerät nach Anspruch 5, wobei der Leuchtdiodentreiber (16) mit dem integrierten Schaltkreis (20) über einen Optokoppler (26) gekoppelt ist.

7. Haushaltsgerät nach einem der Ansprüche 5 oder 6, wobei die Leiterplatte (12) mit einem dem Entstörfilter (13) nachgeschalteten Anschlussmodul (23) bestückt ist und das Anschlussmodul (23) mittels des integrierten Schaltkreises (20) steuerbar ist.

8. Haushaltsgerät nach einem der vorhergehenden Ansprüche, wobei die Motorsteuerung (24) eine Motorsteuerung (24) für einen bürstenlosen Gleichstrommotor ist.

9. Haushaltsgerät nach einem der vorhergehenden Ansprüche, wobei die Leiterplatte (12) einen mit dem Schaltnetzteil (15) verbundenen Leuchtdiodentreiber (16) aufweist und das Schaltnetzteil (15) den Leuchtdiodentreiber (16) mit einer vierten Kleinspannung versorgt.

10. Haushaltsgerät nach einem der vorhergehenden Ansprüche, wobei die Motorsteuerung (24) einen Dreiphasengleichrichter in Sechspuls-Brückenschaltung aufweist.

11. Haushaltsgerät nach einem der vorhergehenden Ansprüche, wobei das Entstörfilter (13) eingangsseitig an eine Dreiphasen-Wechselstromversorgung anschließbar ist.

12. Haushaltsgerät nach einem der vorhergehenden Ansprüche, wobei das Haushaltsgerät eine Dunstabzugshaube, ein Ofen oder ein Mikrowellengerät ist.

## Claims

1. Domestic appliance, having a circuit (11), which circuit has a circuit board (12) with
- a noise filter (13), which provides a denoised high-voltage signal,
- a switching power supply (15), which is connected to the noise filter (13) in order to supply the denoised high-voltage signal, and
- a motor controller (24) for a motor (25), which is connected to the switching power supply (15) in order to supply a first low voltage,
**characterised in that**
- the motor controller (24) is additionally connected to the noise filter (13) in order to supply the denoised high-voltage signal.

2. Domestic appliance according to claim 1, wherein the power supply (15) generates a plurality of different low voltages on the output side.

3. Domestic appliance according to one of the preceding claims, wherein the circuit board (12) has a bus or a bus system (18) in the form of an opto-digital D-bus, which is supplied with a second low voltage by means of the power supply (15).

4. Domestic appliance according to one of the preceding claims, wherein the circuit board (12) has an integrated circuit (20) connected downstream of the power supply (15), which integrated circuit (20) can be operated at a third low voltage by means of the power supply (15).

5. Domestic appliance according to claim 4, wherein the integrated circuit (20) is connected to at least one actuatable operating element (21) and is configured to use an actuator signal of the at least one actuatable operating element (21) to control or regulate an LED driver (16), wherein the LED driver (16) is coupled with the integrated circuit (20).

6. Domestic appliance according to claim 5, wherein the LED driver (16) is coupled with the integrated circuit (20) via an optocoupler (26).

7. Domestic appliance according to one of claims 5 or 6, wherein the circuit board (12) is equipped with a terminal module (23) connected downstream of the noise filter (13) and the terminal module (23) can be controlled by means of the integrated circuit (20).

8. Domestic appliance according to one of the preceding claims, wherein the motor controller (24) is a motor controller (24) for a brushless DC motor.

9. Domestic appliance according to one of the preceding claims, wherein the circuit board (12) has an LED driver (16) connected to the switching power supply (15) and the switching power supply (15) supplies the LED driver (16) with a fourth low voltage.

10. Domestic appliance according to one of the preceding claims, wherein the motor controller (24) has a three-phase rectifier in a six-pulse bridge configuration.

11. Domestic appliance according to one of the preceding claims, wherein the noise filter (13) can be linked to a three-phase AC supply on the input side.

12. Domestic appliance according to one of the preceding claims, wherein the domestic appliance is an extractor hood, an oven or a microwave appliance.

## Revendications

1. Appareil ménager présentant un circuit (11), lequel circuit (11) présente une plaquette à circuit imprimé (12) comprenant
- un filtre antiparasite (13) qui fournit un signal de haute tension déparasité,
- un bloc d'alimentation secteur (15) qui est relié au filtre antiparasite (13) pour l'alimentation avec le signal de haute tension déparasité, et
- une commande de moteur (24) pour un moteur (25), laquelle est reliée au bloc d'alimentation secteur (15) pour l'alimentation avec une première basse tension,
**caractérisé en ce que**
- la commande de moteur (24) est en plus reliée au filtre antiparasite (13) pour l'alimentation avec le signal de haute tension déparasité.

2. Appareil ménager selon la revendication 1, le bloc d'alimentation secteur (15) générant plusieurs basses tensions différentes côté sortie.

3. Appareil ménager selon l'une quelconque des revendications précédentes, la plaquette à circuit imprimé (12) présentant un bus ou un système de bus (18) sous forme d'un bus D opto-digital, qui est alimenté avec une deuxième basse tension au moyen du bloc d'alimentation secteur (15).

4. Appareil ménager selon l'une quelconque des revendications précédentes, la plaquette à circuit imprimé (12) présentant un circuit (20) intégré, installé en aval du bloc d'alimentation secteur (15), lequel circuit peut être mis en fonction avec une troisième basse tension au moyen du bloc d'alimentation secteur (15).

5. Appareil ménager selon la revendication 4, le circuit (20) intégré étant relié à au moins un élément de commande (21) commandable et étant à cet effet configuré pour utiliser un signal de commande de l'au moins un élément de commande (21) commandable pour la commande ou le réglage d'un driver (16) de diode électroluminescente, le driver (16) de diode électroluminescente étant couplé au circuit (20) intégré.

6. Appareil ménager selon la revendication 5, le driver (16) de diode électroluminescente étant couplé au circuit (20) intégré par l'intermédiaire d'un optocoupleur (26).

7. Appareil ménager selon la revendication 5 ou 6, la plaquette à circuit imprimé (12) étant équipée d'un module de connexion (23) installé en aval du filtre antiparasite (13) et le module de connexion (23) étant commandable au moyen du circuit (20) intégré.

8. Appareil ménager selon l'une quelconque des revendications précédentes, la commande de moteur (24) étant une commande de moteur (24) pour un moteur à courant continu sans balai.

9. Appareil ménager selon l'une quelconque des revendications précédentes, la plaquette à circuit imprimé (12) présentant un driver (16) de diode électroluminescente relié au bloc d'alimentation secteur (15) et le bloc d'alimentation secteur (15) alimentant le driver (16) de diode électroluminescente avec une quatrième basse tension.

10. Appareil ménager selon l'une quelconque des revendications précédentes, la commande de moteur (24) présentant un redresseur triphasé à montage en pont à six phases.

11. Appareil ménager selon l'une quelconque des revendications précédentes, le filtre antiparasite (13) pouvant être raccordé côté entrée à une alimentation triphasée en courant alternatif.

12. Appareil ménager selon l'une quelconque des revendications précédentes, l'appareil ménager étant une hotte aspirante, un four ou un appareil à microondes.
